# EUROPEAN PATENT SPECIFICATION

(11) **EP 4 501 597 B1**
(45) Date of publication and mention of the grant of the patent: **13.05.2026**
(21) Application number: 24179384.3
(22) Date of filing: 31.05.2024
(51) Int. Cl.: B29C 65/18, B29C 65/32, B29C 65/36, B29C 65/72, B29C 73/12, B29C 73/32, B29C 73/10, B29C 73/30, B29C 73/34, B29L 31/30, B29C 35/08

(54) **CONSOLIDATING THERMOPLASTIC MATERIAL WITH INDUCTION HEATING COIL AND HEATING PLATE(S)**
KONSOLIDIERUNG VON THERMOPLASTISCHEM MATERIAL MIT INDUKTIONSHEIZSPULE UND HEIZPLATTE(N)
CONSOLIDATION DE MATÉRIAU THERMOPLASTIQUE AVEC BOBINE DE CHAUFFAGE PAR INDUCTION ET PLAQUE(S) CHAUFFANTE(S)

(30) Priority: 31.07.2023 US 202318228358
(43) Date of publication of application: 05.02.2025
(73) Proprietor: Rohr, Inc., Chula Vista, CA 91910-2098 (US)
(72) Inventor: TANG, Alfred Y., Riverside, 92507 (US); KIYANITSYN, Igor, Corona, 92878 (US); MITROVIC, Milan, Del Mar, 92014 (US); VAN TOOREN, Michael, San Diego, 92122 (US); WOODS, Jeffrey D., Beaumont, 92223 (US)
(74) Representative: Dehns

(56) References cited:
- DE-A1- 102011 076 463
- US-A1- 2022 161 508

## Description

### BACKGROUND

### 1. Technical Field

This disclosure relates generally to joining methods and, more particularly, to consolidating thermoplastic material together.

### 2. Background Information

Various systems and methods are known in the art for joining thermoplastic materials together. While these known joining systems and methods have various benefits, there is still room in the art for improvement.

DE 10 2011 076463 A1 discloses a prior art repair method as set forth in the preamble of claim 1.

US 2022/161508 A1 discloses prior art methods for producing a structural component.

### SUMMARY OF THE DISCLOSURE

According to an aspect of the present disclosure, a repair method is provided as recited in claim 1.

Features of embodiments are set forth in the dependent claims.

The foregoing features and the operation of the invention will become more apparent in light of the following description and the accompanying drawings.

### BRIEF DESCRIPTION OF THE DRAWINGS

FIG. 1 is a partial schematic sectional illustration of a thermoplastic component.
FIG. 2 is a cutaway schematic sectional illustration of an aircraft propulsion system which may include the thermoplastic component.
FIG. 3 is a schematic illustration of an aircraft with an aircraft airframe which may include the thermoplastic component.
FIG. 4 is a partial schematic sectional illustration of layers in the thermoplastic component.
FIG. 5 is a flow diagram of a method for manufacturing a thermoplastic component.
FIG. 6 is a partial schematic sectional illustration of a system for consolidating a stack of thermoplastic components together using an induction heating coil.
FIG. 7 is a partial schematic sectional illustration of a portion of the consolidation system with another stack of thermoplastic components.
FIG. 8 is a schematic plan view illustration of the induction heating coil along one of the thermoplastic components.
FIG. 9 is a partial schematic sectional illustration of a portion of the consolidation system with still another stack of thermoplastic components.
FIGS. 10 and 11 are partial schematic sectional illustrations of alternative thermoplastic component configurations.

### DETAILED DESCRIPTION

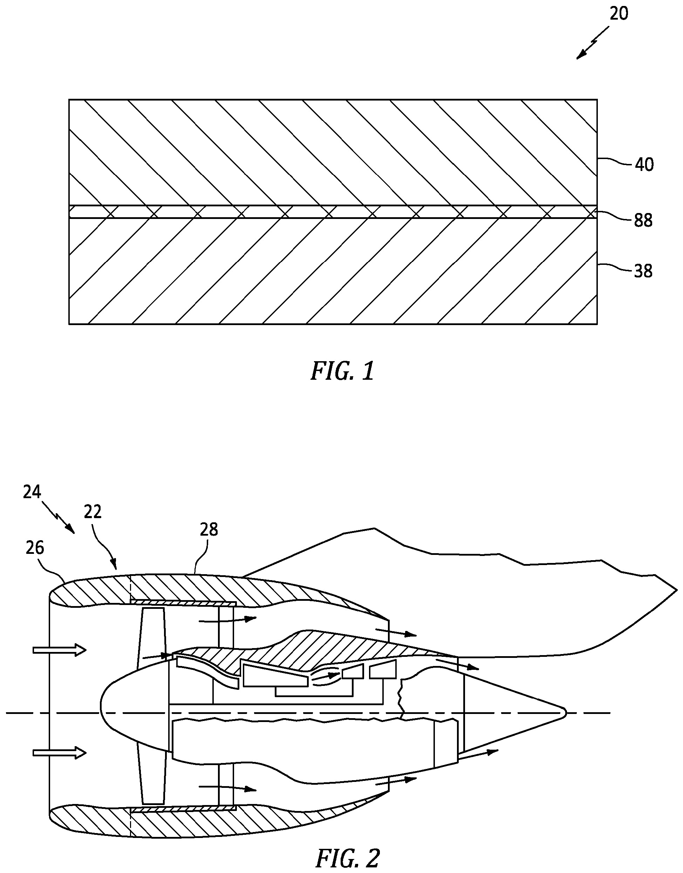

The present disclosure includes methods and systems for manufacturing a thermoplastic component 20 (e.g., a thermoplastic composite component) of an aircraft, where an exemplary section of the aircraft component 20 is shown in FIG. 1. The aircraft may be an airplane, a helicopter, a drone (e.g., an unmanned aerial vehicle (UAV)) or any other manned or unmanned aerial vehicle or system.

The term "manufacturing" may describe a process for original manufacturing the aircraft component 20; e.g., creating a brand new aircraft component. The term "manufacturing" may also or alternatively describe a process for remanufacturing or otherwise repairing the aircraft component 20; e.g., restoring one or more features of a previously formed aircraft component to brand new condition, similar to brand new condition, better than brand new condition, etc. The aircraft component 20, for example, may be repaired to fix one or more defects (e.g., cracks, wear and/or other damage) imparted during previous use of the aircraft component. The aircraft component 20 may also or alternatively be repaired to fix one or more defects imparted during the initial formation of the aircraft component. For ease of description, however, the aircraft component 20 may be described below as a repaired aircraft component, and the methods may be described as repair methods.

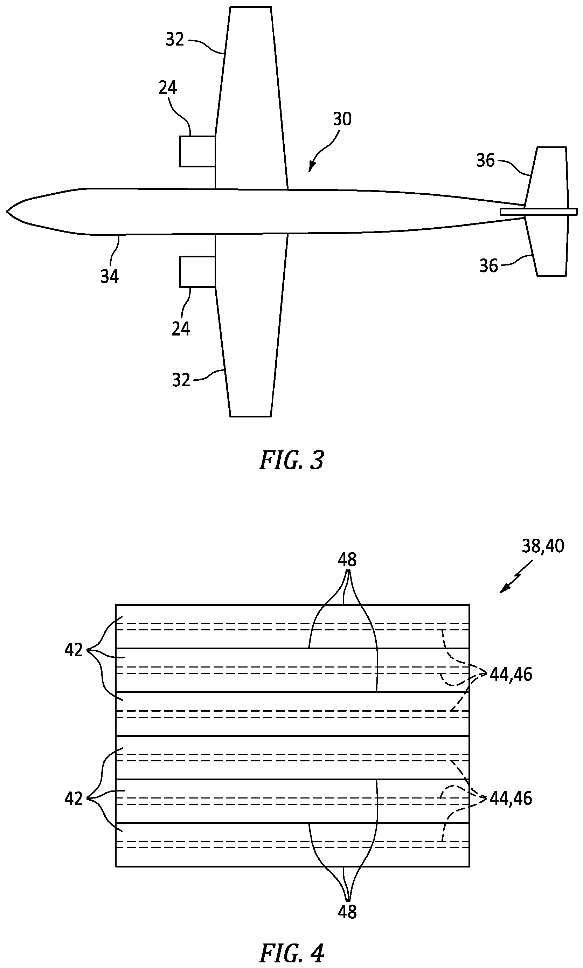

Referring to FIG. 2, the aircraft component 20 may be configured as or otherwise included as part of a nacelle 22 of a propulsion system 24 for the aircraft. The aircraft component 20, for example, may be (or may be part of) a component of a nacelle inlet structure 26; e.g., a nacelle inlet lip (e.g., a nose lip), a nacelle outer barrel, a nacelle inner barrel, etc. In another example, the aircraft component 20 may be (or may be part of) another component of the propulsion system nacelle 22 such as a cowl 28 (e.g., a fan cowl), or the like. Referring to FIG. 3, the aircraft component 20 may alternatively be configured as or otherwise included as part of an airframe 30 of the aircraft. The aircraft component 20, for example, may be (or may be part of) an aircraft wing 32, an aircraft fuselage skin 34, an aircraft stabilizer 36, or the like. The aircraft component 20 may still alternatively be configured as or otherwise included as part of a structure within the aircraft airframe 30; e.g., within a cabin of the aircraft. The present disclosure, however, is not limited to manufacturing the foregoing exemplary aircraft components. Moreover, it is contemplated the methods of the present disclosure may be utilized for manufacturing (e.g., repairing or creating) non-aircraft components. However, for ease of description, the thermoplastic component is generally described below as the aircraft component 20.

Referring again to FIG. 1, the aircraft component 20 includes a plurality of thermoplastic bodies consolidated (e.g., induction welded) together to form the aircraft component 20. Where the aircraft component 20 is a repaired aircraft component, the first thermoplastic body may be a thermoplastic component base 38 and the second thermoplastic body may be a thermoplastic component patch 40. The component base 38 may be a portion or an entirety of a damaged aircraft component which is to be repaired (prior to the consolidation). The component patch 40 may be configured to partially or completely repair damage to the damaged aircraft component (prior to the consolidation). Alternatively, the thermoplastic bodies 38 and 40 may be discrete layers of thermoplastic material which are consolidated together to form a consolidated multilayer patch, which patch may then be bonded to a damaged aircraft component in a subsequent operation. On the other hand, where the aircraft component 20 is a brand new aircraft component, each of the thermoplastic bodies 38 and 40 may be a discrete layer of thermoplastic material (prior to the consolidation), the first thermoplastic body may be a preform of the aircraft component 20 to which additional thermoplastic material (e.g., at least or only the second thermoplastic body 40) is consolidated with, etc. However, for ease of description, the first thermoplastic body and the second thermoplastic body may be generally described below as the component base 38 and the component patch 40.

Referring to FIG. 4, each of the thermoplastic bodies 38 and 40 may include a thermoplastic matrix 42 and fiber-reinforcement 44 embedded within the thermoplastic matrix 42. The thermoplastic matrix 42 may include a semi-crystalline thermoplastic material and/or an amorphous thermoplastic material. The fiber-reinforcement 44 may include a plurality of fibers 46 such as, but not limited to, carbon fibers (e.g., fibers of carbon fiber material). The fiber-reinforcement 44 and its fibers 46 may be arranged in one or more layers 48 within the respective thermoplastic body 38, 40 and its thermoplastic matrix 42. The fibers 46 in each layer 48 of the fiber-reinforcement 44 may be arranged in a unidirectional pattern. Alternatively, the fibers 46 in one or more of the layers 48 of the fiber-reinforcement 44 may be arranged in a multi-directional pattern; e.g., woven together in a weave. The fibers 46 in each layer 48 of the fiber-reinforcement 44 include continuous fibers and/or chopped fibers. The present disclosure, however, is not limited to the foregoing exemplary fiber types and/or fiber arrangements. Moreover, while each thermoplastic body 38, 40 is described above as including the fiber-reinforcement 44 embedded within the thermoplastic matrix 42, it is contemplated one of the thermoplastic bodies 38 and 40 (e.g., the component patch 40) may alternatively be configured without any the fiber-reinforcement 44 embedded within the thermoplastic matrix 42.

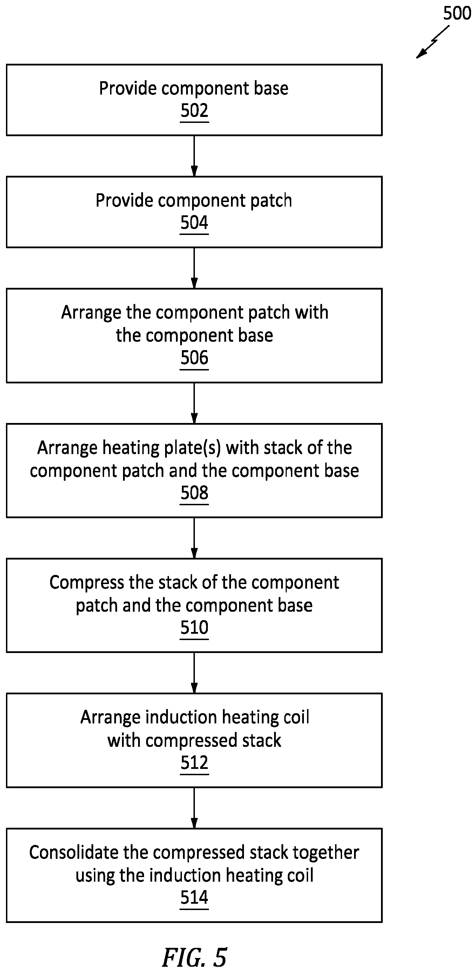

FIG. 5 is a flow diagram of a method 500 for manufacturing a thermoplastic component; e.g., a thermoplastic composite component. For ease of description, this manufacturing method 500 is described below as a repair method and with respect to the repaired aircraft component 20 described above. The present disclosure, however, is not limited thereto. The manufacturing method 500, for example, may alternatively be performed to create a brand new aircraft component. Moreover, the manufacturing method 500 may be performed to repair or create components with various other structural configurations than that described above.

In step 502, the component base 38 (the first thermoplastic body) is provided. The damaged component to be repaired, for example, may be removed from the aircraft and/or otherwise received and prepared for patching. Alternatively, the damaged component to be repaired may be prepared for patching while still installed with or otherwise onboard the aircraft.

In step 504, the component patch 40 (the second thermoplastic body) is provided. A piece of thermoplastic stock material, for example, may be cutout to form the component patch 40. The thermoplastic stock material may be a (e.g., laminated) sheet of thermoplastic composite material, prepreg material, etc. The component patch 40, of course, may alternatively be laminated, molded, pressed, injection molded, stamped and/or otherwise formed.

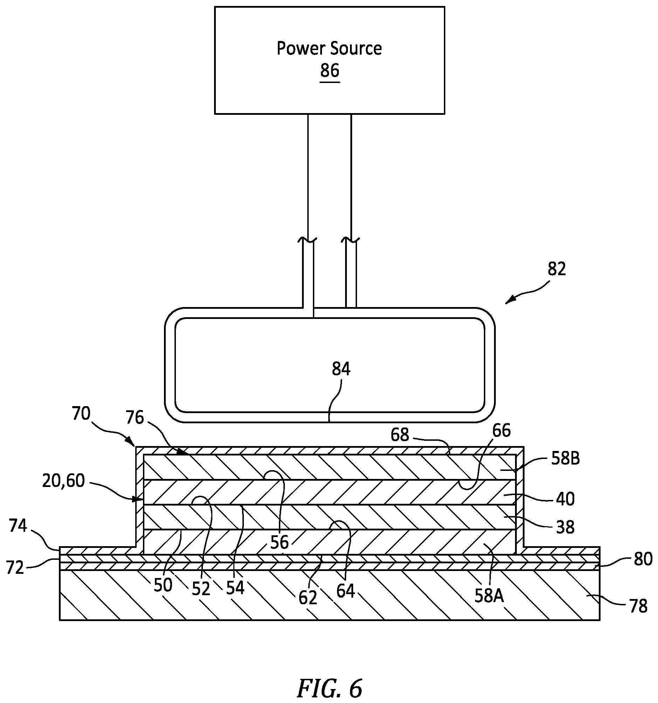

In step 506, the component patch 40 is arranged with the component base 38 for consolidation; e.g., induction welding together. For example, the component patch 40 of FIG. 6 is disposed on the component base 38. The component base 38 of FIG. 6 has a base thickness that extends vertically between and to a first (e.g., lower) surface 50 of the component base 38 and a second (e.g., upper) surface 52 of the component base 38. The component patch 40 of FIG. 6 has a patch thickness that extends vertically between and to a first (e.g., lower) surface 54 of the component patch 40 and a second (e.g., upper) surface 56 of the component patch 40. The patch first surface 54 of FIG. 6 is abutted against and contacts the base second surface 52. The patch first surface 54, for example, may lay against (e.g., rest on, be disposed in full contact with, be disposed flat against, etc.) the base second surface 52.

While the surfaces 52 and 54 are shown with straight-line sectional geometries in the plane of FIG. 6, it is contemplated the surfaces 52 and 54 may alternatively have non-straight-line (e.g., curved, compound, etc.) sectional geometries in the plane of FIG. 6. Moreover, the surfaces 52 and 54 may also or alternatively have straight-line or non-straight-line sectional geometries in a plane perpendicular to the plane of FIG. 6. For example, the surfaces 52 and 54 may be flat, planar surfaces, two-dimensional (2D) curved or otherwise non-flat surfaces, or three-dimensional (3D) curved or otherwise non-flat surfaces.

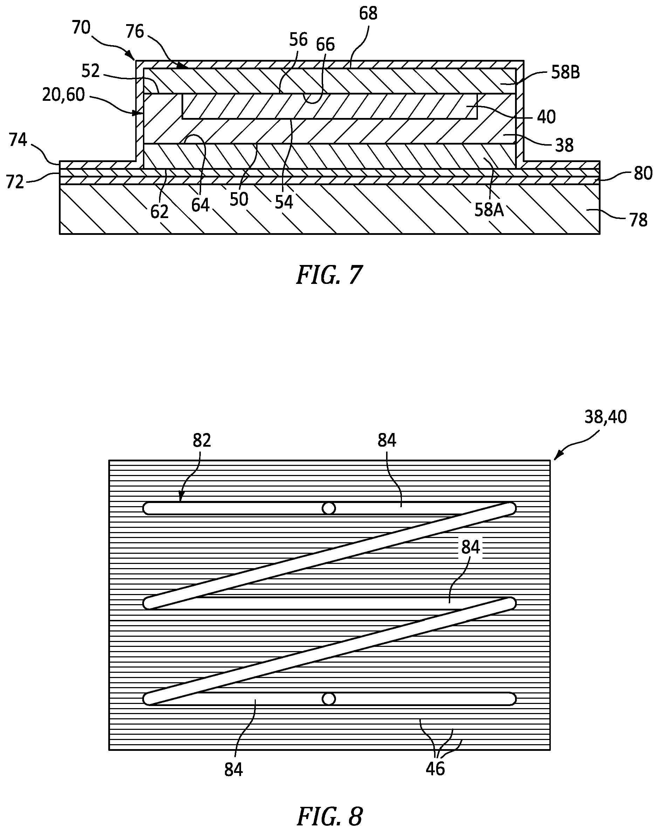

In step 508, one or more conduction heating plates 58A and 58B (generally referred to as "58") are arranged with a stack 60 of the thermoplastic bodies 38 and 40. Each heating plate 58 may be constructed from a magnetic material such as stainless steel (SS). The first (e.g., lower) heating plate 58A has a plate thickness that extends vertically between and to a first (e.g., lower) surface 62 of the first heating plate 58A and a second (e.g., upper) surface 64 of the first heating plate 58A. The first plate second surface 64 is abutted against and engages (e.g., contacts) the stack 60 at a first (e.g., lower) side of the stack 60. The first heating plate 58A, for example, is abutted against the component base 38. The first plate second surface 64, for example, may lay against (e.g., rest on, be disposed in full contact with, be disposed flat against, etc.) the base first surface 50. Similarly, the second (e.g., upper) heating plate 58B has a plate thickness that extends vertically between and to a first (e.g., lower) surface 66 of the second heating plate 58B and a second (e.g., upper) surface 68 of the second heating plate 58B. The second plate first surface 66 is abutted against and engages (e.g., contacts) the stack 60 at a second (e.g., upper) side of the stack 60. The second heating plate 58B, for example, is abutted against the component patch 40 (and the component base 38 in some embodiments; e.g., see FIG. 7). The second plate first surface 66, for example, may lay against (e.g., rest on, be disposed in full contact with, be disposed flat against, etc.) the patch second surface 56 (and the base second surface 52 in some embodiments; e.g., see FIG. 7). With this arrangement, the stack 60 is located (e.g., sandwiched) vertically between the first heating plate 58A and the second heating plate 58B.

While the surfaces 50 and 64, 56 and 66 are shown with straight-line sectional geometries in the plane of FIG. 6, it is contemplated the surfaces 50 and 64, 56 and 66 may alternatively have non-straight-line (e.g., curved, compound, etc.) sectional geometries in the plane of FIG. 6. Moreover, the surfaces 50 and 64, 56 and 66 may also or alternatively have straight-line or non-straight-line sectional geometries in a plane perpendicular to the plane of FIG. 6. For example, the surfaces 50 and 64, 56 and 66 may be flat, planar surfaces, two-dimensional (2D) curved or otherwise non-flat surfaces, or three-dimensional (3D) curved or otherwise non-flat surfaces. However, each surface 50, 56, 64, 66 may be an uninterrupted surface. Herein, the term "uninterrupted" may describe a surface without any discrete apertures (e.g., channels, dimples, notches, grooves, etc.) and/or without any discrete protrusions (e.g., ribs, bumps, etc.) The present disclosure, however, is not limited to such an uninterrupted surface arrangement.

In some embodiments, one or more of the heating plates 58 may each be coated with a protective coating. One or more of the heating plate surfaces 64 and/or 66 of FIG. 6, for example, may be coated with the protective coating. This protective coating may be selected to facilitate release of the thermoplastic bodies 38 and 40 from the heating plates 58 following consolidation. For example, the protective coating may be constructed from Frekote^{®} material manufactured by Henkel Adhesive Technologies of Düsseldorf, Germany.

In step 510, the stack 60 is compressed. The stack 60 and the heating plates 58 of FIG. 6, for example, may be configured within a vacuum bag 70. This vacuum bag 70 may be formed by a first (e.g., lower) sheet 72 and a second (e.g., upper) sheet 74. Each vacuum bag sheet 72, 74 may be constructed from a material which does not (e.g., permanently) bond with the heating plates 58 during the manufacturing method 500. For example, the material may be a polyimide such as Kapton^{®} polyimide material manufactured by DowDuPont Company (formerly DuPont de Nemours, Inc. of Delaware, United States). The second sheet 74 of FIG. 6 is attached to the first sheet 72 at (e.g., on, adjacent or proximate) an outer periphery of the second sheet 74 to form an internal volume 76 (e.g., a vacuum bag cavity) between the first sheet 72 and the second sheet 74. The stack 60 and the heating plates 58 are disposed within this internal volume 76, and a vacuum is applied to the vacuum bag 70 to compress the stack 60 vertically between the heating plates 58. More particularly, the component base 38 is pressed between the first heating plate 58A and the component patch 40, and the component patch 40 is pressed between the second heating plate 58B and the component base 38. Of course, various other techniques are known in the art for applying pressure to (e.g., compressing) a stack of thermoplastic material for consolidation, and the present disclosure is not limited to any particular ones thereof.

The vacuum bagged (or otherwise compressed) arrangement of the thermoplastic bodies 38 and 40 and the heating plates 58 may be supported on a rigid support structure 78; e.g., a processing table. The vacuum bagged arrangement of FIG. 6, for example, is disposed on a protective layer 80 (e.g., a silicon sheet), which protective layer 80 is disposed on the support structure 78. Of course, it is contemplated the vacuum bagged arrangement may alternatively be disposed directly on the support structure 78 without the protective layer 80 in other embodiments.

In step 512, an induction heating coil 82 (e.g., an induction welding coil) is arranged with the (e.g., compressed) stack 60. The induction heating coil 82, for example, may be disposed over and slightly spaced from) the vacuum bagged arrangement. Here, the second heating plate 58B is positioned vertically between the stack 60 and the induction heating coil 82, and the arrangement of the stack 60 and the heating plates 58 is arranged vertically between the support structure 78 and the induction heating coil 82. Referring to FIG. 8, the induction heating coil 82 may include one or more coil segments 84, where each coil segment 84 may be arranged to be substantially parallel with at least some or all of the fibers 46 (schematically shown) within one or more of the thermoplastic bodies 38 and 40.

In step 514, the thermoplastic bodies 38 and 40 of FIG. 6 are consolidated together while being compressed at a consolidation pressure; e.g., via the vacuum bag 70. This consolidation is performed using (e.g., only) the induction heating coil 82; e.g., without any other heating devices such as other electric heater(s), an oven, an autoclave, etc. A power source 86 coupled to the induction heating coil 82, for example, may provide a high frequency (e.g., alternating) current to the induction heating coil 82. The induction heating coil 82 may subsequently generate electromagnetic waves which concurrently excite (a) at least some (or all) of the fibers 46 (see FIGS. 4 and 8) within each thermoplastic composite body 38, 40 and (b) at least some (or all) of the material forming each heating plate 58. The fibers 46 and heating plate material are excited by eddy currents propagated within the respective elements 38, 40, 58A and/or 58B. The excitation of the fibers 46 may elevate a temperature of each thermoplastic body 38, 40. The excitation of the heating plate material may elevate a temperature of each heating plate 58. Each heated heating plate 58 may subsequently further elevate the temperature of each thermoplastic body 38, 40 by conducting heat energy into the respective thermoplastic body 38, 40. The thermoplastic bodies 38 and 40 are heated to a melting point temperature of its thermoplastic matrix 42 (see FIG. 4) such that the thermoplastic matrix 42 of each thermoplastic body 38, 40 melts. A melt layer 88 (see FIG. 1) may form at an interface between the thermoplastic bodies 38 and 40. This melt layer 88 may bond the thermoplastic bodies 38 and 40 together upon cooling thereof. By induction heating the thermoplastic bodies 38 and 40 directly and indirectly heating the thermoplastic bodies 38 and 40 through the heating plates 58, the thermoplastic bodies 38 and 40 may be consolidated together using relatively low power from the power source 86 as compared to, for example, power required for a typical autoclave, oven or hot stamp press.

Using the foregoing consolidation step 514, the stack 60 may be compressed during the consolidation at a relatively low consolidation pressure. The consolidation pressure, for example, may be equal to or less than two atmospheric pressure (2 atm, 203 kPa) during the consolidation. For example, the consolidation pressure may be maintained at about (e.g., +/- 0.1 atm, +/- 10 kPa) or exactly one atmospheric pressure (1 atm, 101kPa). By contrast, other thermoplastic welding techniques may require pressures greater than three atmospheric pressure (3 atm, 304 kPa).

Following the consolidation, the now consolidated thermoplastic bodies 38 and 40 are removed from the vacuum bag 70. The heating plates 58 are removed as well to provide the aircraft component 20; e.g., the repaired aircraft component.

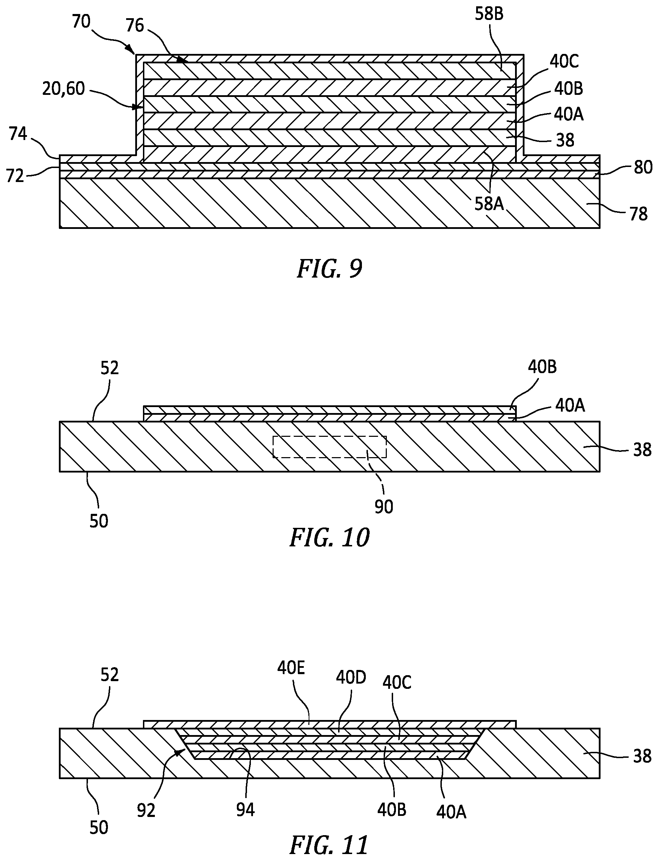

While the aircraft component 20 of FIG. 6 includes the single component patch 40, it is contemplated the aircraft component 20 may alternatively include multiple component patches 40A-E (generally referred to as "40") as shown in FIGS. 9-11; e.g., a multi-layered patch / patch structure. Here, the multiple component patches 40 may be consolidated with the component base 38 simultaneously using the consolidation step 514 (e.g., induction welding) described above. Of course, in other embodiments, it is contemplated each component patch 40 (or sets of some of the component patches 40) may alternatively be discretely consolidated with the component base 38 where the multi-layered patch / patch structure, for example, is relatively thick.

In some embodiments, referring to FIG. 10, the one or more component patches 40 may be configured to cover a damaged portion 90 of the component base 38. In other embodiments, referring to FIG. 11, the one or more component patches 40 may be configured to at least partially or completely replace the damaged portion of the component base 38. For example, some or all of the damaged portion of the component base 38 may be removed from the component base 38 via one or more removal techniques; e.g., machining, milling, cutting, grit blasting, etc. This removal may form an aperture 92 (e.g., a tapered aperture, a plateaued aperture, etc.) in the component base 38. The aperture 92 of FIG. 11 projects (e.g., partially) vertically into the component base 38 from an exterior surface (e.g., 52) of the component base 38 to an interior surface 94 of the component base 38. Following this removal, the one or more of the component patches 40 disposed with (e.g., in, along and/or over) the aperture 92 and subsequently consolidated with the component base 38 as described above.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except by the attached claims.

## Claims

1. A repair method, comprising:
arranging a thermoplastic patch (40) on a thermoplastic aircraft component (38), the thermoplastic patch (40) and the thermoplastic aircraft component (38) each including a thermoplastic matrix (42) and a plurality of fibers (46) embedded within the thermoplastic matrix (42);
arranging a metal plate (58A; 58B) against a stack (60), the stack (60) including the thermoplastic patch (40) and the thermoplastic aircraft component (38); and
consolidating the thermoplastic patch (40) and the thermoplastic aircraft component (38) together, the consolidating comprising concurrently induction heating the thermoplastic patch (40), the thermoplastic aircraft component (38) and the metal plate (58A; 58B) using an induction heating coil (82),
**characterised in that**
the induction heating comprises exciting at least some of the plurality of fibers (46) in the thermoplastic patch (40), at least some of the plurality of fibers (46) in the thermoplastic aircraft component (38) and at least some material of the metal plate (58A; 58B) with eddy currents generated by the induction heating coil (82).

2. The repair method of claim 1, wherein
the metal plate (58A; 58B) is induction heated to provide a heated metal plate (58A; 58B); and
the consolidating further comprises conduction heating the stack (60) with heat energy from the heated metal plate (58A; 58B).

3. The repair method of claim 1 or 2, wherein the metal plate (58B) is arranged against the thermoplastic patch (40).

4. The repair method of claim 3, further comprising:
arranging a second metal plate (58A) against the thermoplastic aircraft component (38), the stack (60) located between the metal plate (58B) and the second metal plate (58A);
the consolidating comprising concurrently induction heating the thermoplastic patch (40), the thermoplastic aircraft component (38), the metal plate (58B) and the second metal plate (58A) using the induction heating coil (82).

5. The repair method of claim 4, further comprising pressing the stack (60) between the metal plate (58B) and the second metal plate (58A) during the consolidating.

6. The repair method of claim 4 or 5, further comprising:
configuring the stack (60), the metal plate (58B) and the second metal plate (58A) within a vacuum bag (70), the stack (60) pressed between the metal plate (58B) and the second metal plate (58A) using the vacuum bag (70).

7. The repair method of any of claims 4 to 6, wherein at least one of
the metal plate (58B) comprises a first uninterrupted surface (66) engaging the stack (60); or
the second metal plate (58A) comprises a second uninterrupted surface (64) engaging the stack (60).

8. The repair method of any preceding claim, further comprising pressing the thermoplastic patch (40) between the metal plate (58B) and the thermoplastic aircraft component (38) during the consolidating.

9. The repair method of any preceding claim, wherein the metal plate (58A; 58B) is arranged against the thermoplastic aircraft component (38).

10. The repair method of any preceding claim, further comprising:
pressing the thermoplastic aircraft component (38) between the metal plate (58A) and the thermoplastic patch (40) during the consolidating; and/or
pressing the thermoplastic patch (40) against the thermoplastic aircraft component (38) at a pressure less than two atmospheric pressure (203 kPa).

11. The repair method of any preceding claim, wherein a surface (64; 66) of the metal plate (58A; 58B) contacting the stack (60) is covered with a protective material.

12. The repair method of any preceding claim, wherein the aircraft component (20; 38) is configured with an aircraft during the consolidating.

13. The repair method of any preceding claim, further comprising supporting the stack (60) on a support structure (78) during the consolidating with a protective layer (80) between the stack (60) and the support structure (78).

14. The repair method of any preceding claim, wherein at least one of:
the plurality of fibers (46) comprise a plurality of carbon fibers;
the plurality of fibers (46) in at least one layer (48) of the thermoplastic patch (40) are unidirectional; or
the plurality of fibers (46) in at least one layer (48) of the thermoplastic aircraft component (38) are unidirectional, at least along the thermoplastic patch (40).

15. The repair method of any preceding claim, wherein the thermoplastic patch (40) includes a plurality of unconsolidated patch layers (48) prior to the consolidating.

## Patentansprüche

1. Reparaturverfahren, umfassend:
Anordnen eines thermoplastischen Patches (40) auf einer thermoplastischen Luftfahrzeugkomponente (38), wobei das thermoplastische Patch (40) und die thermoplastische Luftfahrzeugkomponente (38) jeweils eine thermoplastische Matrix (42) und eine Vielzahl von Fasern (46), die innerhalb der thermoplastischen Matrix (42) eingebettet sind, einschließen;
Anordnen einer Metallplatte (58A; 58B) an einem Stapel (60), wobei der Stapel (60) das thermoplastische Patch (40) und die thermoplastische Luftfahrzeugkomponente (38) einschließt; und gemeinsames Konsolidieren des thermoplastischen Patches (40) und der thermoplastischen Luftfahrzeugkomponente (38), wobei das Konsolidieren gleichzeitiges induktives Erhitzen des thermoplastischen Patches (40), der thermoplastischen Luftfahrzeugkomponente (38) und der Metallplatte (58A; 58B) unter Verwendung einer Induktionsheizspule (82) umfasst,
**dadurch gekennzeichnet, dass**
das induktive Erhitzen Anregen mindestens einiger der Vielzahl von Fasern (46) in dem thermoplastischen Patch (40), mindestens einiger der Vielzahl von Fasern (46) in der thermoplastischen Luftfahrzeugkomponente (38) und mindestens eines Teils des Materials der Metallplatte (58A; 58B) mit durch die Induktionsheizspule (82) erzeugten Wirbelströmen umfasst.

2. Reparaturverfahren nach Anspruch 1, wobei
die Metallplatte (58A; 58B) induktiv erhitzt wird, um eine erhitzte Metallplatte (58A; 58B) bereitzustellen; und
das Konsolidieren ferner konduktives Erhitzen des Stapels (60) mit Wärmeenergie von der erhitzten Metallplatte (58A; 58B) umfasst.

3. Reparaturverfahren nach Anspruch 1 oder 2, wobei die Metallplatte (58B) an dem thermoplastischen Patch (40) angeordnet ist.

4. Reparaturverfahren nach Anspruch 3, ferner umfassend:
Anordnen einer zweiten Metallplatte (58A) an der thermoplastischen Luftfahrzeugkomponente (38), wobei der Stapel (60) zwischen der Metallplatte (58B) und der zweiten Metallplatte (58A) angeordnet ist;
12 wobei das Konsolidieren gleichzeitiges induktives Erhitzen des thermoplastischen Patches (40), der thermoplastischen Luftfahrzeugkomponente (38), der Metallplatte (58B) und der zweiten Metallplatte (58A) unter Verwendung der Induktionsheizspule (82) umfasst.

5. Reparaturverfahren nach Anspruch 4, ferner umfassend Pressen des Stapels (60) zwischen der Metallplatte (58B) und der zweiten Metallplatte (58A) während des Konsolidierens.

6. Reparaturverfahren nach Anspruch 4 oder 5, ferner umfassend: Konfigurieren des Stapels (60), der Metallplatte (58B) und der zweiten Metallplatte (58A) innerhalb eines Vakuumsacks (70), wobei der Stapel (60) zwischen der Metallplatte (58B) und der zweiten Metallplatte (58A) unter Verwendung des Vakuumsacks (70) gepresst wird.

7. Reparaturverfahren nach einem der Ansprüche 4 bis 6, wobei mindestens eines der Folgenden gilt
die Metallplatte (58B) eine erste ununterbrochene Oberfläche (66) umfasst, die mit dem Stapel (60) in Eingriff steht; oder die zweite Metallplatte (58A) eine zweite ununterbrochene Oberfläche (64) umfasst, die mit dem Stapel (60) in Eingriff steht.

8. Reparaturverfahren nach einem der vorhergehenden Ansprüche, ferner umfassend Pressen des thermoplastischen Patches (40) zwischen der Metallplatte (58B) und der thermoplastischen Luftfahrzeugkomponente (38) während des Konsolidierens.

9. Reparaturverfahren nach einem der vorhergehenden Ansprüche, wobei die Metallplatte (58A; 58B) an der thermoplastischen Luftfahrzeugkomponente (38) angeordnet ist.

10. Reparaturverfahren nach einem der vorhergehenden Ansprüche, ferner umfassend:
Pressen der thermoplastischen Luftfahrzeugkomponente (38) zwischen der Metallplatte (58A) und dem thermoplastischen Patch (40) während des Konsolidierens; und/oder
Pressen des thermoplastischen Patches (40) an die thermoplastische Luftfahrzeugkomponente (38) mit einem Druck von weniger als zwei Atmosphärendruck (203 kPa).

11. Reparaturverfahren nach einem der vorhergehenden Ansprüche, wobei eine Oberfläche (64; 66) der Metallplatte (58A; 58B), die den Stapel (60) kontaktiert, mit einem Schutzmaterial bedeckt ist.

12. Reparaturverfahren nach einem der vorhergehenden Ansprüche, wobei die Luftfahrzeugkomponente (20; 38) während des Konsolidierens mit einem Luftfahrzeug konfiguriert ist.

13. Reparaturverfahren nach einem der vorhergehenden Ansprüche, ferner umfassend Stützen des Stapels (60) auf einer Stützstruktur (78) während des Konsolidierens mit einer Schutzschicht (80) zwischen dem Stapel (60) und der Stützstruktur (78).

14. Reparaturverfahren nach einem der vorhergehenden Ansprüche, wobei mindestens eines der Folgenden gilt:
die Vielzahl von Fasern (46) eine Vielzahl von Kohlenstofffasern umfasst;
die Vielzahl von Fasern (46) in mindestens einer Schicht (48) des thermoplastischen Patches (40) unidirektional ist; oder
die Vielzahl von Fasern (46) in mindestens einer Schicht (48) der thermoplastischen Luftfahrzeugkomponente (38) zumindest entlang des thermoplastischen Patches (40) unidirektional ist.

15. Reparaturverfahren nach einem der vorhergehenden Ansprüche, wobei das thermoplastische Patch (40) vor dem Konsolidieren eine Vielzahl von unkonsolidierten Patch-Schichten (48) einschließt.

## Revendications

1. Procédé de réparation, comprenant :
la disposition d'un patch thermoplastique (40) sur un composant d'aéronef thermoplastique (38), le patch thermoplastique (40) et le composant d'aéronef thermoplastique (38) comportant chacun une matrice thermoplastique (42) et une pluralité de fibres (46) incorporées à l'intérieur de la matrice thermoplastique (42) ;
la disposition d'une plaque métallique (58A ; 58B) contre un empilement (60), l'empilement (60) comportant le patch thermoplastique (40) et le composant d'aéronef thermoplastique (38) ; et
la consolidation du patch thermoplastique (40) et du composant d'aéronef thermoplastique (38), la consolidation comprenant le chauffage par induction simultané du patch thermoplastique (40), du composant d'aéronef thermoplastique (38) et de la plaque métallique (58A ; 58B) à l'aide d'une bobine de chauffage par induction (82),
**caractérisé en ce que**
le chauffage par induction comprend l'excitation d'au moins une partie de la pluralité de fibres (46) dans le patch thermoplastique (40), d'au moins une partie de la pluralité de fibres (46) dans le composant d'aéronef thermoplastique (38) et d'au moins une partie de matériau de la plaque métallique (58A ; 58B) à l'aide de courants de Foucault générés par la bobine de chauffage par induction (82).

2. Procédé de réparation selon la revendication 1, dans lequel la plaque métallique (58A ; 58B) est chauffée par induction pour fournir une plaque métallique (58A ; 58B) chauffée ; et
la consolidation comprend en outre le chauffage par conduction de l'empilement (60) à l'aide d'une énergie thermique à partir de la plaque métallique (58A ; 58B) chauffée.

3. Procédé de réparation selon la revendication 1 ou 2, dans lequel la plaque métallique (58B) est disposée contre le patch thermoplastique (40).

4. Procédé de réparation selon la revendication 3, comprenant en outre :
la disposition d'une seconde plaque métallique (58A) contre le composant d'aéronef thermoplastique (38), l'empilement (60) étant situé entre la plaque métallique (58B) et la seconde plaque métallique (58A) ;
la consolidation comprenant le chauffage par induction simultané du patch thermoplastique (40), du composant d'aéronef thermoplastique (38), de la plaque métallique (58B) et de la seconde plaque métallique (58A) à l'aide de la bobine de chauffage par induction (82).

5. Procédé de réparation selon la revendication 4, comprenant en outre le pressage de l'empilement (60) entre la plaque métallique (58B) et la seconde plaque métallique (58A) pendant la consolidation.

6. Procédé de réparation selon la revendication 4 ou 5, comprenant en outre :
la configuration de l'empilement (60), de la plaque métallique (58B) et de la seconde plaque métallique (58A) à l'intérieur d'un sac sous vide (70), l'empilement (60) étant pressé entre la plaque métallique (58B) et la seconde plaque métallique (58A) à l'aide du sac sous vide (70).

7. Procédé de réparation selon l'une quelconque des revendications 4 à 6, dans lequel au moins l'un de ce qui suit est présent
la plaque métallique (58B) comprend une première surface ininterrompue (66) en prise avec l'empilement (60) ; ou
la seconde plaque métallique (58A) comprend une seconde surface ininterrompue (64) en prise avec l'empilement (60).

8. Procédé de réparation selon l'une quelconque revendication précédente, comprenant en outre le pressage du patch thermoplastique (40) entre la plaque métallique (58B) et le composant d'aéronef thermoplastique (38) pendant la consolidation.

9. Procédé de réparation selon l'une quelconque revendication précédente, dans lequel la plaque métallique (58A ; 58B) est disposée contre le composant d'aéronef thermoplastique (38).

10. Procédé de réparation selon l'une quelconque revendication précédente, comprenant en outre :
le pressage du composant d'aéronef thermoplastique (38) entre la plaque métallique (58A) et le patch thermoplastique (40) pendant la consolidation ; et/ou
le pressage du patch thermoplastique (40) contre le composant d'aéronef thermoplastique (38) à une pression inférieure à deux pressions atmosphériques (203 kPa).

11. Procédé de réparation selon l'une quelconque revendication précédente, dans lequel une surface (64 ; 66) de la plaque métallique (58A ; 58B) en contact avec l'empilement (60) est recouverte d'un matériau protecteur.

12. Procédé de réparation selon l'une quelconque revendication précédente, dans lequel le composant d'aéronef (20 ; 38) est conçu avec un aéronef pendant la consolidation.

13. Procédé de réparation selon l'une quelconque revendication précédente, comprenant en outre le soutien de l'empilement (60) sur une structure de support (78) pendant la consolidation, une couche protectrice (80) étant située entre l'empilement (60) et la structure de support (78).

14. Procédé de réparation selon l'une quelconque revendication précédente, dans lequel au moins l'un de ce qui suit est présent :
la pluralité de fibres (46) comprennent une pluralité de fibres de carbone ;
la pluralité des fibres (46) dans au moins une couche (48) du patch thermoplastique (40) sont unidirectionnelles ; ou
la pluralité de fibres (46) dans au moins une couche (48) du composant d'aéronef thermoplastique (38) sont unidirectionnelles, au moins le long du patch thermoplastique (40).

15. Procédé de réparation selon l'une quelconque revendication précédente, dans lequel le patch thermoplastique (40) comporte une pluralité de couches (48) de patch non consolidées avant la consolidation.
